# EUROPÄISCHE PATENTSCHRIFT

(11) **EP 2 794 623 B1**
(45) Veröffentlichungstag und Bekanntmachung des Hinweises auf die Patenterteilung: **18.10.2017**
(21) Anmeldenummer: 12805591.0
(22) Anmeldetag: 13.12.2012
(51) Int. Cl.: C07F 9/30, C08K 5/5313, C08G 59/14, C09K 21/12

(54) **MISCHUNGEN VON MINDESTENS EINER DIALKYLPHOSPHINSÄURE MIT MINDESTENS EINER ANDEREN, DAVON UNTERSCHIEDLICHEN DIALKYLPHOSPHINSÄURE, VERFAHREN ZU DEREN HERSTELLUNG UND IHRE VERWENDUNG**
MIXTURES OF AT LEAST ONE DIALKYLPHOSPHINIC ACID WITH AT LEAST ONE OTHER DIALKYLPHOSPHINIC ACID THAT IS DIFFERENT THEREFROM, METHOD FOR PRODUCTION THEREOF, AND USE THEREOF
MÉLANGES D'AU MOINS UN ACIDE DIALKYLPHOSPHINIQUE AVEC AU MOINS UN AUTRE ACIDE DIALKYLPHOSPHINIQUE DIFFÉRENT DU PRÉCÉDENT, ET PROCÉDÉ DE PRODUCTION ET UTILISATION DESDITS MÉLANGES

(30) Priorität: 21.12.2011 DE 102011121900
(43) Veröffentlichungstag der Anmeldung: 29.10.2014
(73) Patentinhaber: Clariant International Ltd, 4132 Muttenz (CH)
(72) Erfinder: SCHNEIDER, Fabian, 51105 Köln (DE); OSTEROD, Frank, 50933 Köln (DE); BAUER, Harald, 50170 Kerpen (DE); SICKEN, Martin, 51149 Köln (DE)
(74) Vertreter: Mikulecky, Klaus
(86) Internationale Anmeldenummer: PCT/EP2012/005175
(87) Internationale Veröffentlichungsnummer: WO 2013/091805

(56) Entgegenhaltungen:
- EP-A1- 1 544 205
- WO-A1-99/28327
- DE-A1- 19 752 735
- US-A1- 2009 165 598
- US-B1- 6 300 516

## Beschreibung

Die vorliegende Erfindung betrifft Mischungen von mindestens einer Dialkylphosphinsäure mit mindestens einer anderen, davon unterschiedlichen Dialkylphosphinsäure; ein Verfahren zu deren Herstellung und Verwendung.

Bei der Herstellung von Leiterplatten, die in zunehmenden Maß in verschiedenen Geräten, z. B. Computer, Kameras, Mobiltelefonen, LCD-, TFT-Bildschirmen und anderen Elektronikgeräten Verwendung finden, werden unterschiedliche Materialien, insbesondere Kunststoffe eingesetzt. Hierzu gehören vor allem Duroplaste, glasfaserverstärkte Duroplaste und Thermoplaste. Besonders oft werden wegen ihrer guten Eigenschaften Epoxidharze genutzt.

Gemäß den entsprechenden Normen (IPC-4101, Specification for Base Materials for Rigid ans Multilayer Printed Boards) müssen diese Leiterplatten flammwidrig bzw. flammfest ausgerüstet werden.

Die thermische Expansion von Leiterplatten stellt bei deren Herstellung ein Problem dar. Die Bedingungen der Elektronikfertigung von Leiterplatten verlangen, dass Leiterplatten hohe thermische Belastungen ohne Schädigungen oder Verformungen aushalten. Das Auftragen der Leiterbahnen (bleifreies Löten) auf Leiterplatten erfolgt bei Temperaturen bis ca. 260°C. Daher ist es von Bedeutung, dass sich Leiterplatten unter thermischem Stress nicht verziehen und die Produkte maßhaltig bleiben.

Die thermische Expansion ist vor allem auch bereits bei Prepregs (Kurzform für preimpregnated fibres, das sind vorimprägnierte Fasern und Laminaten von Bedeutung, da diese die Rohformen bzw. Vorstufen von Leiterplatten darstellen.

Es ist somit wichtig die thermische Expansion von Prüfkörpern zu minimieren, um ein gutes, maßhaltiges Produkt (fertige Leiterplatte) zu erhalten.

Die WO-A-1999/028327 beschreibt ein Verfahren zur Herstellung von Salzen der Dialkylphosphinsäuren, bei dem mana) alkylphosphonige und/oder hypophosphorige Säure und/oder deren Alkalisalze mit Olefinen in Gegenwart eines kationischen Radikalstarters zu Dialkylphosphinsäuren und/oder deren Alkalisalzen umsetzt und
b) die nach a) erhaltenen Dialkylphosphinsäuren und/oder deren Alkalisalze mit Metallverbindungen von Mg, Ca, Al, Sb, Sn, Ge, Ti und/oder Zn zu den Dialkylphosphinsäuresalzen der Metalle umsetzt.

Die DE 19752735 beschreibt ein ähnliches Verfahren wie die WO-A-1999/028327, wobei hier als kationischer Radikalstarter 2,2'-Azobis(2-amidinopropan) dihydrochlorid oder 2,2`-Azobis(N,N`-dimethylenisobutyramidin)dihydrochlorid eingesetzt wird.

Schließlich beschreibt die US-A-6300516 ein Verfahren zur Herstellung von Dialkylphosphinsäuren und/oder deren Alkalisalzen durch Umsetzung von Olefinen mit alkylphosphoniger und/oder hypophosphoriger Säure und/oder deren Alkalisalzen sowie die Verwendung der nach diesem Verfahren hergestellten Verbindungen.

Es ist Aufgabe der vorliegenden Erfindung, Kunststoffe für Prepregs, Leiterplatten und Laminate so auszurüsten, dass diese - wenn überhaupt - nur einer sehr geringen thermischen Expansion unterliegen und die Maßhaltigkeit erfüllt wird.

Diese Aufgabe wird gelöst durch die Verwendung von Mischungen von mindestens einer Dialkylphosphinsäure der Formel (I) 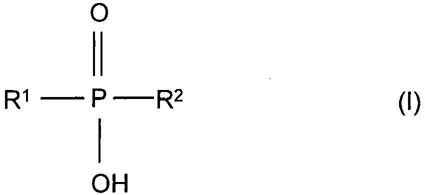 worin
- R¹, R²: gleich oder verschieden sind und C₁-C₁₈-Alkyl, C₂-C₁₈-Alkenyl, C₆-C₁₈-Aryl, C₇-C₁₈-Alkyl-Aryl bedeuten,
mit mindestens einer davon unterschiedlichen Dialkylphosphinsäure der Formel (II) 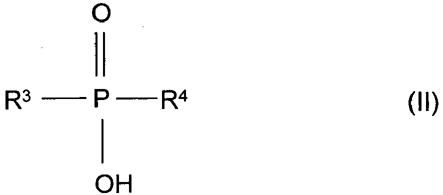 worin
- R³, R⁴: gleich oder verschieden sind und C₁-C₁₈-Alkyl, C₂-C₁₈-Alkenyl, C₆-C₁₈-Aryl und/oder C₇-C₁₈-Alkyl-Aryl bedeuten,
mit der Maßgabe, dass mindestens einer der Reste R³ und R⁴ von R¹ und R² verschieden ist, wobei
die Mischungen 40 bis 99,9 Gew.-% Dialkylphosphinsäure der Formel (I) und 60 bis 0,1 Gew.-% Dialkylphosphinsäure der Formel (II) enthalten, als Flammschutzmittel für duroplastische Polymere.

Bevorzugt sind R¹ und R² gleich oder verschieden sind und bedeuten Methyl, Ethyl, n-Propyl, iso-Propyl, n-Butyl, iso-Butyl, tert.-Butyl, n-Pentyl, iso-Pentyl, n-Hexyl, iso-Hexyl und/oder Phenyl.

Bevorzugt sind R³ und R⁴ gleich oder verschieden sind und bedeuten Methyl, Ethyl, n-Propyl, iso-Propyl, n-Butyl, iso-Butyl, tert.-Butyl, n-Pentyl, iso-Pentyl, n-Hexyl, iso-Hexyl und/oder Phenyl mit der Maßgabe, dass mindestens einer der Reste R³ und R⁴ von R¹ und R² verschieden ist.

Weiterhin bevorzugt sind Mischungen die 60 bis 99,9 Gew.-% Dialkylphosphinsäure der Formel (I) und 40 bis 0,1 Gew.-% einer davon unterschiedlichen Dialkylphosphinsäure der Formel (II) enthalten.

Auch bevorzugt sind Mischungen die 80 bis 99,9 Gew.-% Dialkylphosphinsäure der Formel (I) und 20 bis 0,1 Gew.-% einer davon unterschiedlichen Dialkylphosphinsäure der Formel (II) enthalten.

Bevorzugt sind ebenfalls Mischungen die 90 bis 99,9 Gew.-% Dialkylphosphinsäure der Formel (I) und 10 bis 0,1 Gew.-% einer davon unterschiedlichen Dialkylphosphinsäure der Formel (II) enthalten.

Zudem bevorzugt sind Mischungen welche 95 bis 99,9 Gew.-% Dialkylphosphinsäure der Formel (I) und 5 bis 0,1 Gew.-% einer davon unterschiedlichen Dialkylphosphinsäure der Formel (II) enthalten.

Besonders bevorzugt sind aber Mischungen die 98 bis 99,9 Gew.-% Dialkylphosphinsäure der Formel (I) und 2 bis 0,1 Gew.-% einer davon unterschiedlichen Dialkylphosphinsäure der Formel (II) enthalten.

Bevorzugt handelt es sich bei den Dialkylphosphinsäuren um Diethylphosphinsäure, Ethyl-propylphosphinsäure, Ethyl-butylphosphinsäure, Ethyl-pentylphosphinsäure, Ethyl-hexylphosphinsäure, Dipropylphosphinsäure, Propyl-butylphosphinsäure, Propyl-pentylphosphinsäure, Propylhexylphosphinsäure, Dibutylphosphinsäure, Butyl-pentylphosphinsäure, Butylhexylphosphinsäure, Dipentylphosphinsäure, Pentyl-hexylphosphinsäure und/oder Dihexylphosphinsäure.

Erfindungsgemäß besonders bevorzugt sind Mischungen enthaltend 98 bis 99,9 Gew.-% Diethylphosphinsäure und 2 bis 0,1 Gew.-% Butyl-ethylphosphinsäure.

Bevorzugt enthalten die erfindungsgemäßen Mischungen weiterhin mindestens einen Synergisten, wobei es sich bei dem Synergisten um eine Stickstoff enthaltende Verbindung wie Melem, Melam, Melon, Melaminborat, Melamincyanurat, Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat;
um Aluminiumverbindungen wie Aluminiumhydroxid, Halloysite, Saphire-Produkte, Böhmit, Nano-Böhmit;
um Magnesiumverbindungen wie Magnesiumhydroxid;
um Zinnverbindungen wie Zinnoxide;
um Antimonverbindungen wie Antimonoxide;
um Zinkverbindungen wie Zinkoxid, Zinkhydroxid, Zinkoxidhydrat, Zinkcarbonat, Zinkstannat, Zinkhydroxystannat, Zink-Silicat, Zinkphosphat, Zinkborphosphat, Zinkborat und/oder Zinkmolybdat;
um Siliziumverbindungen, wie Silikate und/oder Silikone;
um Phosphorverbindungen wie Phosphinsäuren und ihre Salze, Phosphonsäuren und ihre Salze und/oder Phosphinoxide, Phosphazene und/oder Piperazin(pyro)phosphate;
um Carbodiimide, Piperazine, (Poly-)isocyanate, Styrol-Acryl-Polymere; und/oder Carbinylbiscaprolactam;
um stickstoffhaltige Verbindungen aus der Gruppe oligomere Ester des Tris(hydroxyethyl)isocyanurats mit aromatischen Polycarbinsäuren, oder Benzoguanamin, Acetoguanamin, Tris(hydroxyethyl)-isocyanurat, Allantoin, Glycouril, Cyanurate, Cyanurate-Epoxidverbindungen, Harnstoffcyanurat, Dicyanamid, Guanidin, Guanidinphosphat und/oder -sulfat handelt.

Bevorzugt enthalten die Mischungen 99 bis 1 Gew.-% der Mischungen von mindestens einer Dialkylphosphinsäure der Formel (I) und einer davon unterschiedlichen Dialkylphosphinsäure der Formel (II) nach mindestens einem der Ansprüche 1 bis 12 und 1 bis 99 Gew.-% an Synergist.

Ein Verfahren zur Herstellung der Mischungen zur Verwendung nach mindestens einem der Ansprüche 1 bis 12, ist dadurch gekennzeichnet, dass eine Phosphorquelle mit einem Initiator und einem Olefin umgesetzt wird und die so erhaltene alkylierte Phosphorverbindung mit einer Mineralsäure behandelt und durch Eindampfen und Aufarbeitung in ein Gemisch von mindestens einer Dialkylphosphinsäure der Formel (I) und mindestens einer davon unterschiedlichen Dialkylphosphinsäure der Formel (II) überführt wird.

Bevorzugt handelt es sich bei der Phosphorquelle um ein Phosphinsäuresalz, bei dem Olefin um Ethylen und der Mineralsäure um Schwefelsäure oder Salzsäure und bei dem Radikalinitiator um 2,2'-Azobis(2-amidinopropan)-dihydrochlorid, 2,2'-Azobis(N,N'-dimethylenisobutyramidin)-dihydrochlorid, Azobis(isobutyronitril), 4,4'Azobis(4-cyano-pentansäure) und/oder 2,2'Azobis(2-methylbutyronitril oder um Wasserstoffperoxid, Ammoniumperoxodisulfat, Kaliumoperoxodisulfat, Dibenzoylperoxid, Di-tert.-butylperoxid , Peressigsäure, Diisobutyryl-peroxid, Cumol-peroxineodecanoat, tert.-Butyl-peroxineodecanoat, tert.-Butyl-peroxipivalat, tert.-Amyl-peroxipivalat, Dipropyl-peroxidicarbonat, Dibutyl-peroxidicarbonat, Dimyristyl-peroxidicarbonat, Dilauroyl-peroxid, 1,1,3,3-Tetramethylbutyl-peroxi-2-ethylhexanoat, tert.-Amyl-peroxi-2-ethylhexylcarbonat, tert.-Butyl-peroxiisobutyrat, 1,1-Di-(tert.-butylperoxi)-cyclohexan, tert.-Butyl-peroxibenzoat, tert.-Butyl-peroxiacetat, tert.-Butyl-peroxidiethylacetat, tert.-Butyl-peroxiisopropylcarbonat, 2,2-Di-(tert.-butylperoxi)-butan, tert.-Amyl-hydroperoxid und/oder 2,5-Dimethyl-2,5-di-(tert.-butylperoxi)-hexan:

Bevorzugt wird das Verfahren so ausgeführt, dass Natriumphosphinat mit Ethylen und anschließend mit verdünnter Schwefelsäure umgesetzt, eingedampft, filtriert und destilliert wird, um eine Mischung aus Diethylphosphinsäure und Butyl-ethyl-phosphinsäure zu erhalten.

Bevorzugt findet die Umsetzung in einem Lösungsmittel statt und es handelt sich bei dem Lösungsmittel um einen Alkohol, Säure oder Wasser.

Bevorzugt liegt die Reaktionstemperatur zwischen 50 und 150 °C.

Die Erfindung umfasst auch die Verwendung von Mischungenn nach mindestens einem der Ansprüche 1 bis 12 als Zwischenprodukt für weitere Synthesen, als Binder, als Vernetzer bzw. Beschleuniger beim Aushärten von Epoxyharzen, Polyurethanen und ungesättigten Polyesterharzen.

Die Erfindung betrifft auch die Verwendung der nach Anspruch 13 erhaltenen Epoxyharze zur Herstellung von Prepregs, Leiterplatten und Laminaten.

Insbesondere umfasst die Erfindung die Verwendung von Mischungenn nach mindestens einem der Ansprüche 1 bis als reaktives und/oder nicht reaktives Flammschutzmittel für Polymere, zur Herstellung von flammgeschützten Polymerformmassen, zur Herstellung von flammgeschützten Polymerformkörpern.

Die Erfindung betrifft zudem die Verwendung von Mischungen nach mindestens einem der Ansprüche 1 bis 12 als reaktives und/oder nicht reaktives Flammschutzmittel für duroplastische Polymere, zur Herstellung von flammgeschützten duroplastischen Polymerformmassen und zur Herstellung von flammgeschützten duroplastischen Polymerformkörpern.

Die Erfindung betrifft auch eine flammgeschützte thermoplastische oder duroplastische Polymerformmasse, Polymer-Formkörper, -Filme, -Fäden und -Fasern enthaltend 0,5 bis 45 Gew.-% Mischungen nach mindestens einem der Ansprüche 1 bis 12, 0,5 bis 99,5 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Schließlich betrifft die Erfindung auch eine flammgeschützte thermoplastische oder duroplastische Polymerformmasse, Polymer-Formkörper, -Filme, -Fäden und -Fasern, enthaltend 1 bis 30 Gew.-% Mischungen nach mindestens einem der Ansprüche 1 bis 12, 10 bis 95 Gew.-% thermoplastisches oder duroplastisches Polymer oder Mischungen derselben, 2 bis 30 Gew.-% Additive und 2 bis 30 Gew.-% Füllstoff bzw. Verstärkungsmaterialien, wobei die Summe der Komponenten 100 Gew.-% beträgt.

Beansprucht werden Mischungen von mindestens einer Dialkylphosphinsäure der Formel (I) und mindestens einer davon unterschiedlichen Dialkylphosphinsäure der Formel (II) mit der Maßgabe, dass mindestens einer der Reste R³ und R⁴ von R¹ und R² verschieden ist. Dies bedeutet, dass entweder R³ oder R⁴ von R¹ und R² verschieden sind oder aber beide, also R³ und R⁴ von R¹ und R² verschieden sind

Bevorzugt Mischungen von mindestens einer Dialkylphosphinsäure der Formel (I) und mindestens einer davon unterschiedlichen Dialkylphosphinsäure der Formel (II) sind zusammengesetzt aus
Dimethylphosphinsäure und Methyl-ethyl-phosphinsäure,
Dimethylphosphinsäure und Methyl-propyl-phosphinsäure,
Dimethylphosphinsäure und Methyl-butyl-phosphinsäure,
Dimethylphosphinsäure und Methyl-pentyl-phosphinsäure,
Dimethylphosphinsäure und Methyl-hexyl-phosphinsäure,
Dimethylphosphinsäure und Ethyl-ethyl-phosphinsäure,
Dimethylphosphinsäure und Ethyl-propyl-phosphinsäure,
Dimethylphosphinsäure und Ethyl-butyl-phosphinsäure,
Dimethylphosphinsäure und Ethyl-pentyl-phosphinsäure,
Dimethylphosphinsäure und Ethyl-hexyl-phosphinsäure,
Dimethylphosphinsäure und Propyl-propyl-phosphinsäure,
Dimethylphosphinsäure und Propyl-butyl-phosphinsäure,
Dimethylphosphinsäure und Propyl-pentyl-phosphinsäure,
Dimethylphosphinsäure und Propyl-hexyl-phosphinsäure,
Dimethylphosphinsäure und Butyl-butyl-phosphinsäure,
Dimethylphosphinsäure und Butyl-pentyl-phosphinsäure,
Dimethylphosphinsäure und Butyl-hexyl-phosphinsäure,
Dimethylphosphinsäure und Pentyl-pentyl-phosphinsäure,
Dimethylphosphinsäure und Pentyl-hexyl-phosphinsäure,
Dimethylphosphinsäure und Hexyl-hexyl-phosphinsäure,
Diethylphosphinsäure und Methyl-ethyl-phosphinsäure,
Diethylphosphinsäure und Methyl-propyl-phosphinsäure,
Diethylphosphinsäure und Methyl-butyl-phosphinsäure,
Diethylphosphinsäure und Methyl-pentyl-phosphinsäure,
Diethylphosphinsäure und Methyl-hexyl-phosphinsäure,
Diethylphosphinsäure und Ethyl-propyl-phosphinsäure,
Diethylphosphinsäure und Ethyl-butyl-phosphinsäure,
Diethylphosphinsäure und Ethyl-pentyl-phosphinsäure,
Diethylphosphinsäure und Ethyl-hexyl-phosphinsäure,
Diethylphosphinsäure und Propyl-propyl-phosphinsäure,
Diethylphosphinsäure und Propyl-butyl-phosphinsäure,
Diethylphosphinsäure und Propyl-pentyl-phosphinsäure,
Diethylphosphinsäure und Propyl-hexyl-phosphinsäure,
Diethylphosphinsäure und Butyl-butyl-phosphinsäure,
Diethylphosphinsäure und Butyl-pentyl-phosphinsäure,
Diethylphosphinsäure und Butyl-hexyl-phosphinsäure,
Diethylphosphinsäure und Pentyl-pentyl-phosphinsäure,
Diethylphosphinsäure und Pentyl-hexyl-phosphinsäure,
Diethylphosphinsäure und Hexyl-hexyl-phosphinsäure,
Dipropylphosphinsäure und Methyl-ethyl-phosphinsäure,
Dipropylphosphinsäure und Methyl-propyl-phosphinsäure,
Dipropylphosphinsäure und Methyl-butyl-phosphinsäure,
Dipropylphosphinsäure und Methyl-pentyl-phosphinsäure,
Dipropylphosphinsäure und Methyl-hexyl-phosphinsäure,
Dipropylphosphinsäure und Ethyl-propyl-phosphinsäure,
Dipropylphosphinsäure und Ethyl-butyl-phosphinsäure,
Dipropylphosphinsäure und Ethyl-pentyl-phosphinsäure,
Dipropylphosphinsäure und Ethyl-hexyl-phosphinsäure,
Dipropylphosphinsäure und Propyl-butyl-phosphinsäure,
Dipropylphosphinsäure und Propyl-pentyl-phosphinsäure,
Dipropylphosphinsäure und Propyl-hexyl-phosphinsäure,
Dipropylphosphinsäure und Butyl-butyl-phosphinsäure,
Dipropylphosphinsäure und Butyl-pentyl-phosphinsäure,
Dipropylphosphinsäure und Butyl-hexyl-phosphinsäure,
Dipropylphosphinsäure und Pentyl-pentyl-phosphinsäure,
Dipropylphosphinsäure und Pentyl -hexyl-phosphinsäure,
Dipropylphosphinsäure und Hexyl-hexyl-phosphinsäure,
Dibutylphosphinsäure und Methyl-ethyl-phosphinsäure,
Dibutylphosphinsäure und Methyl-propyl-phosphinsäure,
Dibutylphosphinsäure und Methyl-butyl-phosphinsäure,
Dibutylphosphinsäure und Methyl-pentyl-phosphinsäure,
Dibutylphosphinsäure und Methyl-hexyl-phosphinsäure,
Dibutylphosphinsäure und Ethyl-propyl-phosphinsäure,
Dibutylphosphinsäure und Ethyl-butyl-phosphinsäure,
Dibutylphosphinsäure und Ethyl-pentyl-phosphinsäure,
Dibutylphosphinsäure und Ethyl-hexyl-phosphinsäure,
Dibutylphosphinsäure und Propyl-butyl-phosphinsäure,
Dibutylphosphinsäure e und Propyl-pentyl-phosphinsäure,
Dibutylphosphinsäure und Propyl-hexyl-phosphinsäure,
Dibutylphosphinsäure und Butyl-pentyl-phosphinsäure,
Dibutylphosphinsäure und Butyl-hexyl-phosphinsäure,
Dibutylphosphinsäure und Pentyl-pentyl-phosphinsäure,
Dibutylphosphinsäure und Pentyl-hexyl-phosphinsäure,
Dibutylphosphinsäure und Hexyl-hexyl-phosphinsäure,
Dipentylphosphinsäure und Methyl-ethyl-phosphinsäure,
Dipentylphosphinsäure und Methyl-propyl-phosphinsäure,
Dipentylphosphinsäure und Methyl-butyl-phosphinsäure,
Dipentylphosphinsäure und Methyl-pentyl-phosphinsäure,
Dipentylphosphinsäure und Methyl-hexyl-phosphinsäure,
Dipentylphosphinsäure und Ethyl-propyl-phosphinsäure,
Dipentylphosphinsäure und Ethyl-butyl-phosphinsäure,
Dipentylphosphinsäure und Ethyl-pentyl-phosphinsäure,
Dipentylphosphinsäure und Ethyl-hexyl-phosphinsäure,
Dipentylphosphinsäure und Propyl-butyl-phosphinsäure,
Dipentylphosphinsäure e und Propyl-pentyl-phosphinsäure,
Dipentylphosphinsäure und Propyl-hexyl-phosphinsäure,
Dipentylphosphinsäure und Butyl-pentyl-phosphinsäure,
Dipentylphosphinsäure und Butyl-hexyl-phosphinsäure,
Dipentylphosphinsäure und Pentyl-hexyl-phosphinsäure,
Dipentylphosphinsäure und Hexyl-hexyl-phosphinsäure,
Dihexylphosphinsäure und Methyl-ethyl-phosphinsäure,
Dihexylphosphinsäure und Methyl-propyl-phosphinsäure,
Dihexylphosphinsäure und Methyl-butyl-phosphinsäure,
Dihexylphosphinsäure und Methyl-pentyl-phosphinsäure,
Dihexylphosphinsäure und Methyl-hexyl-phosphinsäure,
Dihexylphosphinsäure und Ethyl-propyl-phosphinsäure,
Dihexylphosphinsäure und Ethyl-butyl-phosphinsäure,
Dihexylphosphinsäure und Ethyl-pentyl-phosphinsäure,
Dihexylphosphinsäure und Ethyl-hexyl-phosphinsäure,
Dihexylphosphinsäure und Propyl-butyl-phosphinsäure,
Dihexylphosphinsäure e und Propyl-pentyl-phosphinsäure,
Dihexylphosphinsäure und Propyl-hexyl-phosphinsäure,
Dihexylphosphinsäure und Butyl-pentyl-phosphinsäure,
Dihexylphosphinsäure und Butyl-hexyl-phosphinsäure,
Dihexylphosphinsäure und Pentyl-hexyl-phosphinsäure,
Methyl-ethyl-phosphinsäure und Methyl-Propyl-phosphinsäure,
Methyl-ethyl-phosphinsäure und Methyl-Butyl-phosphinsäure,
Methyl-ethyl-phosphinsäure und Methyl-Pentyl-phosphinsäure,
Methyl-ethyl-phosphinsäure und Methyl-Hexyl-phosphinsäure,
Methyl-ethyl-phosphinsäure und Ethyl-Propyl-phosphinsäure,
Methyl-ethyl-phosphinsäure und Ethyl-Butyl-phosphinsäure,
Methyl-ethyl-phosphinsäure und Ethyl-Pentyl- phosphinsäure,
Methyl-ethyl-phosphinsäure und Ethyl-Hexyl- phosphinsäure,
Methyl-ethyl-phosphinsäure und Propyl-Butyl-phosphinsäure,
Methyl-ethyl-phosphinsäure und Propyl-Pentyl-phosphinsäure,
Methyl-ethyl-phosphinsäure und Propyl-Hexyl-phosphinsäure,
Methyl-ethyl-phosphinsäure und Butyl-Pentyl-phosphinsäure,
Methyl-ethyl-phosphinsäure und Butyl-Hexyl-phosphinsäure,
Methyl-ethyl-phosphinsäure und Pentyl-Hexyl-phosphinsäure,
Methyl-Propyl-phosphinsäure und Methyl-Butyl-phosphinsäure,
Methyl-Propyl-phosphinsäure und Methyl-Pentyl-phosphinsäure,
Methyl-Propyl-phosphinsäure und Methyl-Hexyl-phosphinsäure,
Methyl-Propyl-phosphinsäure und Ethyl-Propyl-phosphinsäure,
Methyl-Propyl-phosphinsäure und Ethyl-Butyl-phosphinsäure,
Methyl-Propyl-phosphinsäure und Ethyl-Pentyl-phosphinsäure,
Methyl-Propyl-phosphinsäure und Ethyl-Hexyl-phosphinsäure,
Methyl-Propyl-phosphinsäure und Propyl-butyl-phosphinsäure,
Methyl-Propyl-phosphinsäure und Propyl-pentyl-phosphinsäure,
Methyl-Propyl-phosphinsäure und Propyl-hexyl-phosphinsäure,
Methyl-Propyl-phosphinsäure und Butyl-pentyl-phosphinsäure,
Methyl-Propyl-phosphinsäure und Butyl-hexyl-phosphinsäure,
Methyl-Propyl-phosphinsäure und Pentyl-hexyl-phosphinsäure,
Methyl-Butyl-phosphinsäure und Methyl-pentyl-phosphinsäure,
Methyl-Butyl-phosphinsäure und Methyl-hexyl-phosphinsäure,
Methyl-Butyl-phosphinsäure und Ethyl-propyl-phosphinsäure,
Methyl-Butyl-phosphinsäure und Ethyl-butyl-phosphinsäure,
Methyl-Butyl-phosphinsäure und Ethyl-pentyl-phosphinsäure,
Methyl-Butyl-phosphinsäure und Ethyl-hexyl-phosphinsäure,
Methyl-Butyl-phosphinsäure und Propyl-butyl-phosphinsäure,
Methyl-Butyl-phosphinsäure und Propyl-pentyl-phosphinsäure,
Methyl-Butyl-phosphinsäure und Propyl-hexyl-phosphinsäure,
Methyl-Butyl-phosphinsäure und Butyl-pentyl- phosphinsäure,
Methyl-Butyl-phosphinsäure und Butyl-hexyl- phosphinsäure,
Methyl-Butyl-phosphinsäure und Pentyl-hexyl-phosphinsäure,
Methyl-Pentyl-phosphinsäure und Methyl-hexyl-phosphinsäure,
Methyl-Pentyl-phosphinsäure und Ethyl-propyl- phosphinsäure,
Methyl-Pentyl-phosphinsäure und Ethyl-butyl- phosphinsäure,
Methyl-Pentyl-phosphinsäure und Ethyl-pentyl- phosphinsäure,
Methyl-Pentyl-phosphinsäure und Ethyl-Hexyl- phosphinsäure,
Methyl-Pentyl-phosphinsäure und Propyl-butyl-phosphinsäure,
Methyl-Pentyl-phosphinsäure und Propyl-pentyl-phosphinsäure,
Methyl-Pentyl-phosphinsäure und Propyl-hexyl-phosphinsäure,
Methyl-Pentyl-phosphinsäure und Butyl-pentyl- phosphinsäure,
Methyl-Pentyl-phosphinsäure und Butyl-hexyl- phosphinsäure,
Methyl-Pentyl-phosphinsäure und Pentyl-hexyl-phosphinsäure,
Methyl-Hexyl-phosphinsäure und Ethyl-propyl- phosphinsäure,
Methyl-Hexyl-phosphinsäure und Ethyl-butyl- phosphinsäure,
Methyl-Hexyl-phosphinsäure und Ethyl-pentyl- phosphinsäure,
Methyl-Hexyl-phosphinsäure und Ethyl-Hexyl- phosphinsäure,
Methyl-Hexyl-phosphinsäure und Propyl-butyl-phosphinsäure,
Methyl-Hexyl-phosphinsäure und Propyl-pentyl-phosphinsäure,
Methyl-Hexyl-phosphinsäure und Propyl-hexyl-phosphinsäure,
Methyl-Hexyl-phosphinsäure und Butyl-pentyl- phosphinsäure,
Methyl-Hexyl-phosphinsäure und Butyl-hexyl- phosphinsäure,
Methyl-Hexyl-phosphinsäure und Pentyl-hexyl-phosphinsäure,
Ethyl-propyl-phosphinsäure und Ethyl-butyl-phosphinsäure,
Ethyl-propyl-phosphinsäure und Ethyl-pentyl-phosphinsäure,
Ethyl-propyl-phosphinsäure und Ethyl-hexyl-phosphinsäure,
Ethyl-propyl-phosphinsäure und Propyl-butyl-phosphinsäure,
Ethyl-propyl-phosphinsäure und Propyl-pentyl-phosphinsäure,
Ethyl-propyl-phosphinsäure und Propyl-hexyl-phosphinsäure,
Ethyl-propyl-phosphinsäure und Butyl-pentyl-phosphinsäure,
Ethyl-propyl-phosphinsäure und Butyl-hexyl-phosphinsäure,
Ethyl-propyl-phosphinsäure und Pentyl-hexyl-phosphinsäure,
Ethyl-butyl-phosphinsäure und Ethyl-propyl-phosphinsäure,
Ethyl-butyl-phosphinsäure und Ethyl-pentyl-phosphinsäure,
Ethyl-butyl-phosphinsäure und Ethyl-hexyl-phosphinsäure,
Ethyl-butyl-phosphinsäure und Propyl-butyl-phosphinsäure,
Ethyl-butyl-phosphinsäure und Propyl-pentyl-phosphinsäure,
Ethyl-butyl-phosphinsäure und Propyl-hexyl-phosphinsäure,
Ethyl-butyl-phosphinsäure und Butyl-propyl-phosphinsäure,
Ethyl-butyl-phosphinsäure und Butyl-pentyl-phosphinsäure,
Ethyl-butyl-phosphinsäure und Butyl-hexyl-phosphinsäure,
Ethyl-butyl-phosphinsäure und Pentyl-ethyl-phosphinsäure,
Ethyl-butyl-phosphinsäure und Pentyl-propyl-phosphinsäure,
Ethyl-butyl-phosphinsäure und Pentyl-butyl-phosphinsäure,
Ethyl-butyl-phosphinsäure und Pentyl-hexyl-phosphinsäure,
Ethyl-pentyl-phosphinsäure und Ethyl-propyl-phosphinsäure,
Ethyl-pentyl-phosphinsäure und Ethyl-butyl-phosphinsäure,
Ethyl-pentyl-phosphinsäure und Ethyl-hexyl-phosphinsäure,
Ethyl-pentyl-phosphinsäure und Propyl-butyl-phosphinsäure,
Ethyl-pentyl-phosphinsäure und Propyl-pentyl-phosphinsäure,
Ethyl-pentyl-phosphinsäure und Propyl-hexyl-phosphinsäure,
Ethyl-pentyl-phosphinsäure und Butyl-propyl-phosphinsäure,
Ethyl-pentyl-phosphinsäure und Butyl-pentyl-phosphinsäure,
Ethyl-pentyl-phosphinsäure und Butyl-hexyl-phosphinsäure,
Ethyl-pentyl-phosphinsäure und Pentyl-propyl-phosphinsäure,
Ethyl-pentyl-phosphinsäure und Pentyl-butyl-phosphinsäure,
Ethyl-pentyl-phosphinsäure und Pentyl-hexyl-phosphinsäure,
Ethyl-hexyl-phosphinsäure und Ethyl-propyl-phosphinsäure,
Ethyl-hexyl-phosphinsäure und Ethyl-butyl-phosphinsäure,
Ethyl-hexyl-phosphinsäure und Ethyl-hexyl-phosphinsäure,
Ethyl-hexyl-phosphinsäure und Propyl-butyl-phosphinsäure,
Ethyl-hexyl-phosphinsäure und Propyl-pentyl-phosphinsäure,
Ethyl-hexyl-phosphinsäure und Propyl-hexyl-phosphinsäure,
Ethyl-hexyl-phosphinsäure und Butyl-propyl-phosphinsäure,
Ethyl-hexyl-phosphinsäure und Butyl-pentyl-phosphinsäure,
Ethyl-hexyl-phosphinsäure und Butyl-hexyl-phosphinsäure,
Ethyl-hexyl-phosphinsäure und Pentyl-propyl-phosphinsäure,
Ethyl-hexyl-phosphinsäure und Pentyl-butyl-phosphinsäure,
Ethyl-hexyl-phosphinsäure und Pentyl-hexyl-phosphinsäure,
Propyl-butyl-phosphinsäure und Propyl-pentyl-phosphinsäure,
Propyl-butyl-phosphinsäure und Propyl-hexyl-phosphinsäure,
Propyl-butyl-phosphinsäure und Butyl-pentyl- phosphinsäure,
Propyl-butyl-phosphinsäure und Butyl-hexyl-phosphinsäure,
Propyl-butyl-phosphinsäure und Pentyl-propyl-phosphinsäure,
Propyl-butyl-phosphinsäure und Pentyl-butyl-phosphinsäure,
Propyl-butyl-phosphinsäure und Pentyl-hexyl-phosphinsäure,
Propyl-butyl-phosphinsäure undHexyl-butyl-phosphinsäure,
Propyl-butyl-phosphinsäure und Hexyl-propyl-phosphinsäure,
Propyl-pentyl-phosphinsäure und Propyl-hexyl-phosphinsäure,
Propyl-pentyl-phosphinsäure und Butyl-pentyl-phosphinsäure,
Propyl-pentyl-phosphinsäure und Butyl-hexyl-phosphinsäure,
Propyl-pentyl-phosphinsäure und Pentyl-butyl-phosphinsäure,
Propyl-pentyl-phosphinsäure und Pentyl-hexyl-phosphinsäure,
Propyl-hexyl-phosphinsäure und Butyl-hexyl-phosphinsäure,
Propyl-hexyl-phosphinsäure und Pentyl-butyl-phosphinsäure,
Propyl-hexyl-phosphinsäure und Pentyl-hexyl-phosphinsäure,
Butyl-pentyl-phosphinsäure und Butyl-hexyl-phosphinsäure,
Butyl-pentyl-phosphinsäure und Pentyl-hexyl-phosphinsäure,
Butyl-pentyl-phosphinsäure und Hexyl-butyl-phosphinsäure,
Butyl-pentyl-phosphinsäure und Hexyl-pentyl-phosphinsäure,
Butyl-hexyl-phosphinsäure und Pentyl-hexyl-phosphinsäure.

Diese Liste schließt auch sämtliche Variationen, wie beispielsweise n-, iso-, tert.- usw. mit ein, also etwa tert.-Butyl-iso-pentyl-phosphinsäure und iso-Hexyl-n-pentyl-phosphinsäure und alle anderen denkbaren Mischungen.

Daneben können auch Mehrfach-Mischungen auftreten, z. B. solche aus Dimethylphosphinsäure und Methyl-ethyl-phosphinsäure und Methyl-propyl-phosphinsäure, Diethylphosphinsäure und Methyl-ethyl-phosphinsäure und Dipropylphosphinsäure usw.; entsprechend sind auch vierfach-Mischungen und Mischungen mit einer höheren Anzahl an den vorgenannten Diphosphinsäuren möglich.

Besonders bevorzugt sind Mischungen aus Dimethylphosphinsäure und Butyl-ethylphosphinsäure, Diethylphosphinsäure und Butyl-ethylphosphinsäure, Dipropylphosphinsäure und Butyl-ethylphosphinsäure, Dibutylphosphinsäure und Butyl-ethylphosphinsäure, Dimethylphosphinsäure und Hexyl-ethylphosphinsäure, Diethylphosphinsäure und Hexyl-ethylphosphinsäure.

Bevorzugt enthält das Gemisch 0,1 bis 99,9 Gew.-% Diphosphinsäure der Formel (I) und 99,9 bis 0,1 Gew.-% Butyl-alkylphosphinsäure der Formel (II).

Besonders bevorzugt enthält das Gemisch 99,9 bis 50 Gew.-% Diphosphinsäure der Formel (I) und 0,1 bis 50 Gew.-% Butyl-alkylphosphinsäure der Formel (II).

Besonders bevorzugt enthält das Gemisch auch 80 bis 99,5 Gew.-% Diphosphinsäure der Formel (I) und 0,5 bis 20 Gew.-% Butyl-alkylphosphinsäure der Formel (II).

Insbesondere bevorzugt enthält das Gemisch 95 bis 99,9 Gew.-% Diphosphinsäure der Formel (I) und 0,1 bis 5 Gew.-% Butyl-alkylphosphinsäure der Formel (II).

Dabei sind als Diphosphinsäure der Formel (I) Diethylphosphinsäure und als Butyl-alkylphosphinsäure der Formel (II) Butyl-ethylphosphinsäure bevorzugt.

Die Erfindung umfasst insbesondere Mischungen bestehend aus 98 bis 99,9 Gew.-% Diethylphosphinsäure und 2 bis 0,1 Gew.-% Butyl-ethylphosphinsäure.

Bevorzugt enthält das Gemisch, wie oben ausgeführt, weiterhin mindestens einen Synergisten. Bevorzugt handelt es sich bei dem Synergist um mindestens einen ausdehnungsneutralen Stoff, d. h. dass er sich unter thermischer oder ähnlicher Belastung in seinen Ausmaßen nicht verändert. Solche Änderungen können mittels des thermischen Ausdehnungskoeffizienten bestimmt werden. Dieser beschreibt die Veränderungen der Abmessungen eines Stoffes bei Temperaturveränderungen.

Bevorzugt enthalten die Gemische 65 bis 1 Gew.-% der Mischung von mindestens einer Dialkylphosphinsäure der Formel (I) und mindestens einer Dialkylphosphinsäure der Formel (II) nach mindestens einem der Ansprüche 1 bis 12 und 1 bis 35 Gew.-% an Synergist.

Bevorzugt enthalten die Gemische auch 80 bis 95 Gew.-% der Mischung von mindestens einer Dialkylphosphinsäure der Formel (I) und mindestens einer Dialkylphosphinsäure der Formel (II) nach mindestens einem der Ansprüche 1 bis 12 und 5 bis 20 Gew.-% an Synergist.

Bevorzugt werden bei dem erfindungsgemäßen Verfahren als Lösungsmittel Essigsäure oder Wasser eingesetzt und die Reaktionstemperatur beträgt bevorzugt 80 bis 120°C.

Bevorzugt ist die Verarbeitung der erfindungsgemäßen Mischung von mindestens einer Dialkylphosphinsäure der Formel (I) und mindestens einer davon unterschiedlichen Dialkylphosphinsäure der Formel (II) durch Einmischen in ein Polymersystem.

Das Einmischen erfolgt durch Kneten, Dispergieren und/oder Extrudieren.

Bevorzugt erfolgt die Verwendung der erfindungsgemäßen Mischung von mindestens einer Dialkylphosphinsäure der Formel (I) und mindestens einer davon unterschiedlichen Dialkylphosphinsäure der Formel (II) durch additive Einarbeitung in ein Polymersystem.

Besonders bevorzugt erfolgt die Verwendung der Mischungen von mindestens einer Dialkylphosphinsäure der Formel (I) und mindestens einer davon unterschiedlichen Dialkylphosphinsäure der Formel (II) durch Einreaktion in ein Polymersystem. Die Einreaktion ist durch eine resultierende, permanente Bindung zu den Polymersträngen des Polymersystems gekennzeichnet, wodurch das erfindungsgemäße Gemisch von mindestens einer Dialkylphosphinsäure der Formel (I) und mindestens einer davon unterschiedlichen Dialkylphosphinsäure der Formel (II) nicht herausgelöst werden kann.

Die erfindungsgemäßen Mischungen können mit weiteren Flammschutzmitteln und weiteren Synergisten eingesetzt werden. Zu den weiteren Flammschutzmitteln gehören beispielsweise Phosphorverbindungen wie Phosphinate, Phosphonate, Phosphate, Phosphonsäuren, Phosphinsäuren, Phosphorsäuren, Phosphane, Phosphanoxide, Phosphoroxide und andere.

Geeignete Polymer-Additive für flammgeschützte Polymerformmassen und Polymerformkörper sind UV-Absorber, Lichtschutzmittel, Gleitmittel, Farbmittel, Antistatika, Nukleierungsmittel, Füllstoffe, Synergisten, Verstärkungsmittel und andere.

Bevorzugt stammen die Polymersysteme aus der Gruppe der thermoplastischen Polymere wie Polyamid, Polyester oder Polystyrol und/oder duroplastischen Polymere.

Besonders bevorzugt handelt es sich bei den duroplastischen Polymeren um Epoxidharze.

Besonders bevorzugt handelt es sich bei den duroplastischen Polymeren um Epoxidharze, die mit Phenolen und/oder Dicyandiamid [allgemeiner: Phenolderivaten (Resole); Alkohole und Amine, insbesondere Phenolderivate und Dicyandiamid) gehärtet sind.

Besonders bevorzugt handelt es sich bei den duroplastischen Polymeren um Epoxidharze, die mit Phenolen und/oder Dicyandiamid und oder einem Katalysator gehärtet sind.

Bevorzugt handelt es sich bei den Katalysatoren um Imidazolverbindungen.

Bevorzugt handelt es sich bei den Epoxidharzen um Polyepoxidverbindungen.

Bevorzugt handelt es sich bei den Epoxidharzen um Harze auf der Basis Novolack und/oder Bisphenol-A.

Bevorzugt handelt es sich bei den Polymeren um Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol^{®} 143E (BASF), Poly-(p-methylstyrol), Poly-(alpha-methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und - methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Styrol-Polymeren um eher grobporigen Schaum wie EPS (expandiertes Polystyrol), z. B. Styropor (BASF) und/oder feinporigeren wie XPS (Extrudierter Polystyrol-Hartschaum), z. B. Styrodur^{®} (BASF). Bevorzugt sind Polystyrolschaumstoffe wie z. B. Austrotherm^{®} XPS, Styrofoam^{®} (Dow Chemical), Floormate^{®}, Jackodur^{®}, Lustron^{®}, Roofmate^{®}, Sagex^{®} und Telgopor^{®}.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.
Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon^{®} 4, Fa. DuPont), Polyamid 4/6 (Poly(tetramethylen-adipamid), Poly-(tetramethylen-adipinsäurediamid), Nylon^{®} 4/6, Fa. DuPont), Polyamid 6 (Polycaprolactam, Poly-6-aminohexansäure, Nylon^{®} 6, Fa. DuPont, Akulon K122, Fa. DSM; Zytel^{®} 7301, Fa. DuPont; Durethan^{®} B 29, Fa. Bayer), Polyamid 6/6 ((Poly(N,N'-hexamethyleneadipinediamid), Nylon^{®} 6/6 , Fa. DuPont, Zytel^{®} 101, Fa. DuPont; Durethan A30, Durethan^{®} AKV, Durethan^{®} AM, Fa. Bayer; Ultramid^{®} A3, Fa BASF), Polyamid 6/9 (Poly(hexamethylen nonanediamid), Nylon^{®} 6/9 , Fa. DuPont), Polyamid 6/10 (Poly(hexamethylen sebacamid), Nylon^{®} 6/10, Fa. DuPont), Polyamid 6/12 (Poly(hexamethylendodecanediamid), Nylon^{®} 6/12, Fa. DuPont), Polyamid 6/66 (Poly(hexamethylenadipamid-co-caprolactam), Nylon^{®} 6/66, Fa. DuPont), Polyamid 7 (Poly-7-aminoheptansäure, Nylon^{®} 7, Fa. DuPont), Polyamid 7,7 (Polyheptamethylenpimelamid, Nylon^{®} 7,7, Fa. DuPont), Polyamid 8 (Poly-8-aminooctansäure, Nylon^{®} 8, Fa. DuPont), Polyamid 8,8 (Polyoctamethylensuberamid, Nylon^{®} 8,8, Fa. DuPont), Polyamid 9 (Poly-9-aminononansäure, Nylon^{®} 9, Fa. DuPont), Polyamid 9,9 (Polynonamethylenazelamid, Nylon^{®} 9,9, Fa. DuPont), Polyamid 10 (Poly-10-amino-decansäure, Nylon^{®} 10, Fa. DuPont), Polyamid 10,9 (Poly(decamethylenazelamid), Nylon^{®} 10,9, Fa. DuPont), Polyamid 10,10 (Polydecamethylensebacamid, Nylon^{®} 10,10, Fa. DuPont), Polyamid 11 (Poly-11-aminoundecansäure, Nylon^{®} 11, Fa. DuPont), Polyamid 12 (Polylauryllactam, Nylon^{®} 12 , Fa. DuPont, Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid, Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Ferner mit EPDM (Ethylen-Propylen-Dien-Kautschuk) oder ABS (Acrylnitril-Butadien-Styrol) modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate.

Bevorzugt handelt es sich bei den Polymeren um Polysulfone, Polyethersulfone und Polyetherketone.
Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethan-acrylaten oder Polyester-acrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugt handelt es sich bei den Polymeren um Mischungen (Polyblends) der vorgenannten Polymeren, wie z. B. PP/EPDM (Polypropylen/ Ethylen-Propylen-Dien-Kautschuk), Polyamid/EPDM oder ABS (Polyamid/Ethylen-Propylen-DienKautschuk oder Acrylnitril-Butadien-Styrol), PVC/EVA (Polyvinylchlorid/ Ethylenvinylacetat), PVC/ABS (Polyvinylchlorid/Acrylnitril-Butadien-Styrol), PVC/MBS (Polyvinylchlorid/ Methacrylat-Butadien-Styrol), PC/ABS (Polycarbonat/Acrylnitril-Butadien-Styrol), PBTP/ABS (Polybutylenterephthalat /Acrylnitril-Butadien-Styrol), PC/ASA (Polycarbonat/Acrylester-Styrol-Acrylnitril), PC/PBT (Polycarbonat/Polybutylen-terephthalat), PVC/CPE (Polyvinylchlorid/chloriertes Polyethylen), PVC/Acrylate (Polyvinylchlorid/Acrylate, POM/thermoplastisches PUR (Polyoxymethylen / thermoplastisches Polyurethan), PC/thermoplastisches PUR (Polycarbonat / thermoplastisches Polyurethan), POM/Acrylat (Polyoxymethylen/Acrylat), POM/MBS (Polyoxymethylen/ Methacrylat-Butadien-Styrol), PPO/HIPS (Polyphenylenoxid /High impact polystyrol), PPO/PA 6.6 (Polyphenylenoxid /Polyamid 6.6) und Copolymere, PA/HDPE (Polyamid /High Density Polyethylen), PA/PP (Polyamid / Polyethylen), PA/PPO (Polyamid / Polyphenylenoxid), PBT/PC/ABS (Polybutylenterephthalat / Polycarbonat / Acrylnitril-Butadien-Styrol) und/ oder PBT/PET/PC (Polybutylenterephthalat / Polyethylenterephthalat / Polycarbonat).

Bevorzugt weist die hergestellte Formmasse eine rechteckige Form mit regelmäßiger oder unregelmäßiger Grundfläche, Würfelform, Quaderform, Kissenform, Prismenform auf.

Die Erfindung wird durch die nachstehenden Beispiele erläutert.

Herstellung, Verarbeitung und Prüfung von flammgeschützten Polymerformmassen und flammgeschützten Polymerformkörpern.

Die Flammschutzkomponenten werden mit dem Polymergranulat und evtl. Additiven vermischt und auf einem Doppelschnecken-Extruder (Typ Leistritz LSM^{®} 30/34) bei Temperaturen von 230 bis 260 °C (PBT-GV) bzw. von 260 bis 280°C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt. Nach UL 94 ergeben sich folgende Brandklassen:
V-0: kein Nachbrennen länger als 10 sec., Summe der Nachbrennzeiten bei 10 Beflammungen nicht größer als 50 sec., kein brennendes Abtropfen, kein vollständiges Abbrennen der Probe, kein Nachglühen der Proben länger als 30 sec. nach Beflammungsende.
V-1: kein Nachbrennen länger als 30 sec. nach Beflammungsende, Summe der Nachbrennzeiten bei 10 Beflammungen nicht größer als 250 sec., kein Nachglühen der Proben länger als 60 sec. nach Beflammungsende, übrige Kriterien wie bei V-0.
V-2: Zündung der Watte durch brennendes Abtropfen, übrige Kriterien wie bei V-1.
Nicht klassifizierbar (nkl). Erfüllt nicht die Brandklasse V-2.

Bei einigen untersuchten Proben wurde außerdem der LOI-Wert gemessen. Der LOI-Wert (Limiting Oxygen Index) wird nach ISO 4589 bestimmt und entspricht der geringsten Sauerstoffkonzentration in Volumen-Prozent, die in einer Mischung von Sauerstoff und Stickstoff gerade noch die Verbrennung des Kunststoffs unterhält. Je höher der LOI-Wert, desto schwerer entflammbar ist das geprüfte Material.

| | | |
|---|---|---|
| LOI | 23 | brennbar |
| LOI | 24-28 | bedingt brennbar |
| LOI | 29-35 | flammwidrig |
| LOI | >36 | besonders flammwidrig |

**Eingesetzte Chemikalien und Abkürzungen**

| | |
|---|---|
| Phenolnovolak: | Bakelite^{®} PF 0790, Fa. Hexion |
| Initiator: | Vazo 67, Fa. DuPont |

### Beispiel 1

Nach EP-A-1544205, Beispiel 8, wird aus Natriumhypophosphit mittels Initiator und Ethylen eine Diethylphosphinsäure-Metallsalz-Lösung erhalten. Durch anschließender Behandlung der Produktlösung mit verdünnter Schwefelsäure, eindampfen, filtrieren und Destillation bei 184 °C (1 mbar) wird in einer Ausbeute von 94 % ein Gemisch aus Diethylphosphinsäure (99,9 Gew.-%) und Butyl-ethylphosphinsäure (0,01 Gew.-%) erhalten.

### Beispiel 2

Nach EP-A-1544205, Beispiel 8, wird aus Natriumhypophosphit mittels Initiator und Ethylen eine Diethylphosphinsäure-Metallsalz-Lösung erhalten. Durch Behandlung der Produktlösung mit verdünnter Schwefelsäure, eindampfen, filtrieren und Destillation bei 180 - 190 °C (1 mbar) wird in einer Ausbeute von 92 % ein Gemisch aus Diethylphosphinsäure (98 Gew.-%) und Butyl-ethylphosphinsäure (2 Gew.-%) erhalten.

### Beispiel 3

Diethylphosphinsäure wird analog EP-A-1544205, Beispiel 8, aus Natriumhypophosphit mittels Initiator und Ethylen erhalten und mittels anschließender Destillation gereinigt.

Butyl-ethylphosphinsäure wird durch Umsetzung von Ethylphosphinsäure mit Buten analog WO-A-2009/010188 synthetisiert. Ein Gemisch aus Diethylphosphinsäure und Butyl-ethylphosphinsäure im Gewichtsverhältnis 90:10 wird durch Mischen der beiden reinen Komponenten erhalten.

### Beispiel 4

Entsprechend Beispiel 3 wird ein Gemisch aus Diethylphosphinsäure und Butyl-Ethylphosphinsäure im Gewichtsverhältnis 60:40 durch Mischen der beiden reinen Komponenten erhalten.

### Beispiel 5

Entsprechend Beispiel 3 wird ein Gemisch aus Diethylphosphinsäure und Butyl-ethylphosphinsäure im Gewichtsverhältnis 50:50 durch Mischen der beiden reinen Komponenten erhalten.

Allgemeine Vorschrift zur Herstellung von Polymerformkörpern:
a) Herstellung von phosphormodifiziertem Epoxidharz
   In einer 2 I-Fünfhalskolbenapparatur werden 1000 g des Epoxidharzes (z. B. Beckopox EP 140) vorgelegt. Es wird über eine Stunde auf 110 °C geheizt und im Vakuum flüchtige Komponenten entfernt. Danach wird das Reaktionsgemisch mit Stickstoff inertisiert und die Temperatur im Kolben auf 170 °C erhöht. Jeweils 118 g des Mischungens der Phosphorverbindungen (ausgewählt aus den Beispielen 1 bis 5) werden unter Rühren und Stickstoffdurchfluss zugegeben wobei eine exotherme Reaktion beobachtet wird. Das erhaltene Harz ist gelb verfärbt und fließfähig.
b) Herstellung von Epoxidharz Probekörpern
   100 Teile des phosphormodifizierten Epoxidharzes werden mit einem entsprechenden OH Äquivalent Phenolnovolak (Hydroxidäquivalent 105 g/mol, Schmelzpunkt 85 - 95 °C) gemischt und auf 150 °C aufgeheizt. Man rührt bis eine homogene Mischung entsteht und lässt auf 130 °C abkühlen. Nun gibt man 0,03 Teile 2-Phenylimidazol zu und rührt nochmals 5 - 10 min. Im Anschluss wird der Ansatz warm in eine Schale gegossen und für 2 h bei 140 °C und 2 h bei 200 °C ausgehärtet.
c) Herstellung Epoxidharz Laminat
   In 63 Teilen Aceton und 27 Teilen Dowanol^{®} PM werden 100 Teile phosphormodifiziertes Epoxidharz nach b) gegeben und mit der entsprechenden Menge Phenolharz versetzt. Man lässt den Ansatz 30 Min. rühren und gibt 2-Phenylimidazol zu. Danach wird der Ansatz über ein 400 µm Sieb filtriert um überschüssige Harzpartikel zu entfernen. Nun wird ein Glasgewebe (Typ 7628, 203 g/m²) in die Lösung eingetaucht, bis eine vollständige Benetzung des Gewebes stattgefunden hat. Das benetzte Gewebe wird aus der Mischung gezogen und überschüssiges Harz entfernt. Im Anschluss wird das benetze Gewebe stufenweise im Trockenschrank für kurze Zeit bei Temperaturen bis auf 165 °C vorgehärtet und danach in einer Heizpresse ausgehärtet. Der Harzanteil der ausgehärteten Laminate beträgt 30 - 50 %.

Von dem hergestellten Formkörper, einem Laminat, wird die thermische Ausdehnung nach ASTM E831-06 bestimmt.

### Beispiel 6

Nach der allgemeinen Vorschrift zur Herstellung eines Polymerformkörpers wird mit 100 % eines Bisphenol-A Harzes ein Laminat hergestellt.

### Beispiel 7

Diethylphosphinsäure wird analog Patent EP-A-1544205, Beispiel 8, aus Natriumhypophosphit mittels Initiator und Ethylen erhalten und mittels anschließender Destillation gereinigt.

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% Diethylphosphinsäure ein Formkörper hergestellt.

### Beispiel 8

Butyl-ethylphosphinsäure wird durch Umsetzung von Ethylphosphinsäure mit Buten analog WO-A-2009/010188 synthetisiert.

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% Butyl-ethylphosphinsäure ein Formkörper hergestellt.

### Beispiel 9

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% der erfindungsgemäßen Mischung nach Beispiel 1 ein Formkörper hergestellt.

### Beispiel 10

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% der erfindungsgemäßen Mischung nach Beispiel 2 ein Formkörper hergestellt.

### Beispiel 11

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% der erfindungsgemäßen Mischung nach Beispiel 3 ein Formkörper hergestellt.

### Beispiel 12

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% der erfindungsgemäßen Mischung nach Beispiel 4 ein Formkörper hergestellt.

### Beispiel 13

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% der erfindungsgemäßen Mischung nach Beispiel 5 ein Formkörper hergestellt.

Die Ergebnisse sind in der nachfolgenden Tabelle wiedergegeben

| Beispiel | Zusammensetzung Polymersystem / Stoffgemisch [Gew.-%/Gew.-%] | Stoffgemisch Dialkylphosphinsäure der Formel (I)/ Dialkylphosphinsäure der Formel (II) [Gew.-%/Gew.-%] | Thermischer Ausdehnungskoefffizient 0° - 100° [ppm/°C] | | |
|---|---|---|---|---|---|
| | | | Z | X | Y |
| 6 | 100:0 | | 69 | 20 | 7 |
| 7 | 90 : 10 | 100 : 0 | 70 | 21 | 8 |
| 8 | 90 : 10 | 0 : 100 | 71 | 20 | 7 |
| 9 | 90 : 10 | 99,9 : 0,1 | 65 | 18 | 5 |
| 10 | 90 : 10 | 98 : 2 | 63 | 17 | 5 |
| 11 | 90 : 10 | 90 : 10 | 60 | 16 | 5 |
| 12 | 90 : 10 | 60 : 40 | 58 | 14 | 4 |
| 13 | 90 : 10 | 50 : 50 | 56 | 13 | 4 |

Im Vergleich zum reinen Laminat (Beispiel 6) nehmen die Werte für den thermischen Ausdehnungskoeffizienten des Laminats mit dem erfindungsgemäßen Gemisch aus Diethylphosphinsäure und Butyl-ethylphosphinsäure ab, die thermische Ausdehnung ist somit sehr gering. Eine Erhöhung des Butyl-ethylphosphinsäure-Anteils bewirkt eine weitere Verbesserung. Die erfindungsgemäßen Produkte führen zu einer geringeren Ausdehnung der hergestellten Formkörper und genügen somit den Anforderungen an die Maßhaltigkeit.

## Patentansprüche

1. Verwendung von Mischungen von mindestens einer Dialkylphosphinsäure der Formel (I) 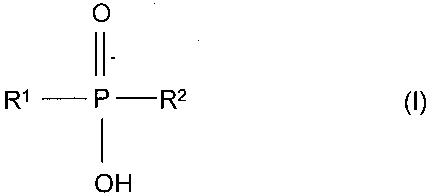 worin
R¹, R² gleich oder verschieden sind und C₁-C₁₈-Alkyl, C₂-C₁₈-Alkenyl, C₆-C₁₈-Aryl, C₇-C₁₈-Alkyl-Aryl bedeuten,
mit mindestens einer davon unterschiedlichen Dialkylphosphinsäure der Formel (II) 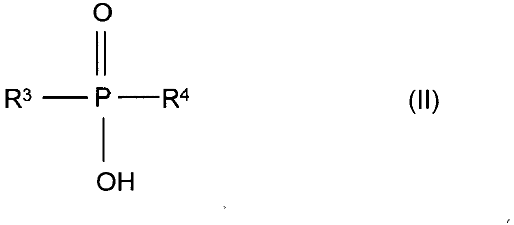 worin
R3, R⁴ gleich oder verschieden sind und C₁-C₁₈-Alkyl, C₂-C₁₈-Alkenyl, C₆-C₁₈-Aryl und/oder C₇-C₁₈₋Alkyl-Aryl bedeuten,
mit der Maßgabe, dass mindestens einer der Reste R³ und R⁴ von R¹ und R² verschieden ist, wobei
die Mischungen 40 bis 99,9 Gew.-% Dialkylphosphinsäure der Formel (I) und 60 bis 0,1 Gew.-% Dialkylphosphinsäure der Formel (II) enthalten, als Flammschutzmittel für duroplastische Polymere.

2. Verwendung von Mischungen nach Anspruch 1, **dadurch gekennzeichnet, dass** R¹ und R² gleich oder verschieden sind und Methyl, Ethyl, n-Propyl, iso-Propyl, n-Butyl, iso-Butyl, tert.-Butyl, n-Pentyl, iso-Penty), n-Hexyl, iso-Hexyl und/oder Phenyl bedeuten.

3. Verwendung von Mischungen nach Anspruch 1 oder 2, **dadurch gekennzeichnet, dass** R³ und R⁴ gleich oder verschieden sind und Methyl, Ethyl, n-Propyl, iso-Propyl, n-Butyl, iso-Butyl, tert.-Butyl, n-Pentyl, iso-Pentyl, n-Hexyl, iso-Hexyl und/oder Phenyl bedeuten mit der Maßgabe, dass mindestens einer der Reste R³ und R⁴ von R¹ und R² verschieden ist.

4. Verwendung von Mischungen nach einem oder mehreren der Ansprüche 1 bis 3, **dadurch gekennzeichnet, dass** sie 60 bis 99,9 Gew.-% Dialkylphosphinsäure der Formel (I) und 40 bis 0,1 Gew.-% einer davon unterschiedlichen Dialkylphosphinsäure der Formel (II) enthalten.

5. Verwendung von Mischungen nach einem oder mehreren der Ansprüche 1 bis 4, **dadurch gekennzeichnet, dass** sie 80 bis 99,9 Gew.-% Dialkylphosphinsäure der Formel (I) und 20 bis 0,1 Gew.-% einer davon unterschiedlichen Dialkylphosphinsäure der Formel (II) enthalten.

6. Verwendung von Mischungen nach einem oder mehreren der Ansprüche 1 bis 5, **dadurch gekennzeichnet, dass** sie 90 bis 99,9 Gew.-% Dialkylphosphinsäure der Formel (I) und 10 bis 0,1 Gew.-% einer davon unterschiedlichen Dialkylphosphinsäure der Formel (II) enthalten.

7. Verwendung von Mischungen nach einem oder mehreren der Ansprüche 1 bis 6, **dadurch gekennzeichnet, dass** sie 95 bis 99,9 Gew.-% Dialkylphosphinsäure der Formel (I) und 5 bis 0,1 Gew.-% einer davon unterschiedlichen Dialkylphosphinsäure der Formel (II) enthalten.

8. Verwendung von Mischungen nach einem oder mehreren der Ansprüche 1 bis 7, **dadurch gekennzeichnet, dass** sie 98 bis 99,9 Gew.-% Dialkylphosphinsäure der Formel (I) und 2 bis 0,1 Gew.-% einer davon unterschiedlichen Dialkylphosphinsäure der Formel (II) enthaltent.

9. Verwendung von Mischungen nach einem oder mehreren der Ansprüche 1 bis 8, **dadurch gekennzeichnet, dass** es sich bei den Dialkylphosphinsäuren um Diethylphosphinsäure, Ethyl-propylphosphinsäure, Ethyl-butylphosphinsäure, Ethyl-pentylphosphinsäure, Ethyl-hexylphosphinsäure, Dipropylphosphinsäure, Propyl-butylphosphinsäure, Propyl-pentylphosphinsäure, Propylhexylphosphinsäure, Dibutylphosphinsäure, Butyl-pentylphosphinsäure, Butylhexylphosphinsäure, Dipentylphosphinsäure, Pentyl-hexylphosphinsäure und/oder Dihexylphosphinsäure.handelt.

10. Verwendung von Mischungen nach einem oder mehreren der Ansprüche 1 bis 9, **dadurch gekennzeichnet, dass** sie 98 bis 99,9 Gew.-% Diethylphosphinsäure und 2 bis 0,1 Gew.-% Butyl-ethylphosphinsäure enthalten.

11. Verwendung von Mischungen nach einem oder mehreren der Ansprüche 1 bis 10, **dadurch gekennzeichnet, dass** sie weiterhin mindestens einen Synergisten enthalten, wobei es sich um eine Stickstoff enthaltende Verbindung wie Melem, Melam, Melon, Melaminborat, Melamincyanurat, Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat;
um Aluminiumverbindungen wie Aluminiumhydroxid, Halloysite, Saphire-Produkte, Böhmit, Nano-Böhmit;
um Magnesiumverbindungen wie Magnesiumhydroxid;
um Zinnverbindungen wie Zinnoxide;
um Antimonverbindungen wie Antimonoxide;
um Zinkverbindungen wie Zinkoxid, Zinkhydroxid, Zinkoxidhydrat, Zinkcarbonat, Zinkstannat, Zinkhydroxystannat, Zink-Silicat, Zinkphosphat, Zinkborphosphat, Zinkborat und/oder Zinkmolybdat;
um Siliziumverbindungen, wie Silikate und/oder Silikone;
um Phosphorverbindungen wie Phosphinsäuren und ihre Salze, Phosphonsäuren und ihre Salze und/oder Phosphinoxide, Phosphazene und/oder Piperazin(pyro)phosphate;
um Carbodiimide, Piperazine, (Poly-)isocyanate, Styrol-Acryl-Polymere; und/oder Carbinylbiscaprolactam;
um stickstoffhaltige Verbindungen aus der Gruppe oligomere Ester des Tris(hydroxyethyl)isocyanurats mit aromatischen Polycarbinsäuren, oder Benzoguanamin, Acetoguanamin, Tris(hydroxyethyl)-isocyanurat, Allantoin, Glycouril, Cyanurate, Cyanurate-Epoxidverbindungen, Harnstoffcyanurat, Dicyanamid, Guanidin, Guanidinphosphat und/oder -sulfat handelt.

12. Verwendung von Mischungen nach einem oder mehreren der Ansprüche 1 bis 11, **dadurch gekennzeichnet, dass** sie 99 bis 1 Gew.-% des Mischungens von mindestens einer Dialkylphosphinsäure der Formel (I) und einer davon unterschiedlichen Dialkylphosphinsäure der Formel (II) nach mindestens einem der Ansprüche 1 bis 12 und 1 bis 99 Gew.-% an Synergist enthalten.

13. Verwendung von Mischungen nach mindestens einem der Ansprüche 1 bis 12 als Binder, als Vernetzer bzw. Beschleuniger beim Aushärten von Epoxyharzen, Polyurethanen und ungesättigten Polyesterharzen.

14. Verwendung der nach Anspruch 13 erhaltenen Epoxyharze zur Herstellung von Prepregs, Leiterplatten und Laminaten.

15. Verwendung von Mischungen nach mindestens einem der Ansprüche 1 bis 12 als reaktives und/oder nicht reaktives Flammschutzmittel für Polymere, zur Herstellung von flammgeschützten Polymerformmassen und zur Herstellung von flammgeschützten Polymerformkörpern.

16. Verwendung von Mischungen nach mindestens einem der Ansprüche 1 bis 12 als reaktives und/oder nicht reaktives Flammschutzmittel für duroplastische Polymere, zur Herstellung von flammgeschützten duroplastischen Polymerformmassen und zur Herstellung von flammgeschützten duroplastischen Polymerformkörpern.

17. Flammgeschützte duroplastische Polymerformmasse, Polymer-Formkörper, -Filme, -Fäden und -Fasern enthaltend 0,5 bis 45 Gew.-% der nach mindestens einem der Ansprüche 1 bis 12 verwendeten Mischungen von mindestens einer Dialkylphosphinsäure der Formel (I) und mindestens einer Dialkylphosphinsäure der Formel (II), 0,5 bis 99,5 Gew.-% duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

18. Flammgeschützte duroplastische Polymerformmasse, Polymer-Formkörper, -Filme, -Fäden und -Fasern gemäß Anspruch 17, enthaltend 1 bis 30 Gew.-% der nach mindestens einem der Ansprüche 1 bis 12 verwendeten Mischungen von mindestens einer Dialkylphosphinsäure der Formel (I) und mindestens einer Dialkylphosphinsäure der Formel (II), 10 bis 95 Gew.-% duroplastisches Polymer oder Mischungen derselben, 2 bis 30 Gew.-% Additive und 2 bis 30 Gew.-% Füllstoff bzw. Verstärkungsmaterialien, wobei die Summe der Komponenten 100 Gew.-% beträgt.

## Claims

1. The use of mixtures of at least one dialkylphosphinic acid of the formula (I) 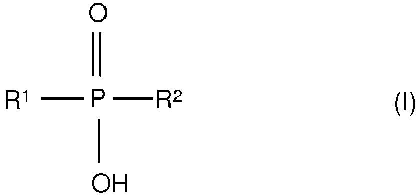 in which
R¹, R² are the same or different and are each C₁-C₁₈-alkyl, C₂-C₁₈-alkenyl, C₆-C₁₈-aryl, C₇-C₁₈-alkylaryl,
with at least one different dialkylphosphinic acid of the formula (II) 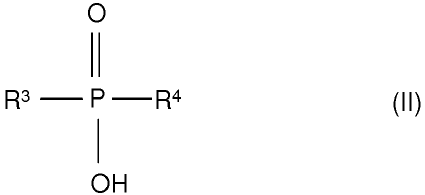 in which
R³, R⁴ are the same or different and are each C₁-C₁₈-alkyl, C₂-C₁₈-alkenyl, C₆-C₁₈-aryl and/or C₇-C₁₈-alkylaryl,
with the proviso that at least one of the R³ and R⁴ radicals is different than R¹ and R², where the mixtures comprise 40 to 99.9% by weight of dialkylphosphinic acid of the formula (I) and 60 to 0.1 % by weight of dialkylphosphinic acid of the formula (II) as flame retardants for thermoset polymers.

2. The use of mixtures as claimed in claim 1, wherein R¹ and R² are the same or different and are each methyl, ethyl, n-propyl, isopropyl, n-butyl, isobutyl, tert-butyl, n-pentyl, isopentyl, n-hexyl, isohexyl and/or phenyl.

3. The use of mixtures as claimed in claim 1 or 2, wherein R³ and R⁴ are the same or different and are each methyl, ethyl, n-propyl, isopropyl, n-butyl, isobutyl, tert-butyl, n-pentyl, isopentyl, n-hexyl, isohexyl and/or phenyl, with the proviso that at least one of the R³ and R⁴ radicals is different than R¹ and R².

4. The use of mixtures as claimed in one or more of claims 1 to 3, which comprise 60 to 99.9% by weight of dialkylphosphinic acid of the formula (I) and 40 to 0.1% by weight of a different dialkylphosphinic acid of the formula (II).

5. The use of mixtures as claimed in one or more of claims 1 to 4, which comprise 80 to 99.9% by weight of dialkylphosphinic acid of the formula (I) and 20 to 0.1% by weight of a different dialkylphosphinic acid of the formula (II).

6. The use of mixtures as claimed in one or more of claims 1 to 5, which comprise 90 to 99.9% by weight of dialkylphosphinic acid of the formula (I) and 10 to 0.1% by weight of a different dialkylphosphinic acid of the formula (II).

7. The use of mixtures as claimed in one or more of claims 1 to 6, which comprise 95 to 99.9% by weight of dialkylphosphinic acid of the formula (I) and 5 to 0.1% by weight of a different dialkylphosphinic acid of the formula (II).

8. The use of mixtures as claimed in one or more of claims 1 to 7, which comprise 98 to 99.9% by weight of dialkylphosphinic acid of the formula (I) and 2 to 0.1% by weight of a different dialkylphosphinic acid of the formula (II).

9. The use of mixtures as claimed in one or more of claims 1 to 8, wherein the dialkylphosphinic acids are
diethylphosphinic acid, ethylpropylphosphinic acid, ethylbutylphosphinic acid, ethylpentylphosphinic acid, ethylhexylphosphinic acid, dipropylphosphinic acid, propylbutylphosphinic acid, propylpentylphosphinic acid, propylhexylphosphinic acid, dibutylphosphinic acid, butylpentylphosphinic acid, butylhexylphosphinic acid, dipentylphosphinic acid, pentylhexylphosphinic acid and/or dihexylphosphinic acid.

10. The use of mixtures as claimed in one or more of claims 1 to 9, which comprise 98 to 99.9% by weight of diethylphosphinic acid and 2 to 0.1% by weight of butylethylphosphinic acid.

11. The use of mixtures as claimed in one or more of claims 1 to 10, which further comprise at least one synergist, the latter being a nitrogen-containing compound such as melem, melam, melon, melamine borate, melamine cyanurate, melamine phosphate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate, melamine polyphosphate, melam polyphosphate, melem polyphosphate and/or melon polyphosphate;
aluminum compounds such as aluminum hydroxide, halloysite, sapphire products, boehmite, nanoboehmite;
magnesium compounds such as magnesium hydroxide;
tin compounds such as tin oxides;
antimony compounds such as antimony oxides;
zinc compounds such as zinc oxide, zinc hydroxide, zinc oxide hydrate, zinc carbonate, zinc stannate, zinc hydroxystannate, zinc silicate, zinc phosphate, zinc borophosphate, zinc borate and/or zinc molybdate;
silicon compounds such as silicates and/or silicones;
phosphorus compounds such as phosphinic acids and salts thereof, phosphonic acids and salts thereof and/or phosphine oxides, phosphazenes and/or piperazine (pyro)phosphates;
carbodiimides, piperazines, (poly)isocyanates, styrene-acrylic polymers; and/or carbinylbiscaprolactam;
nitrogen compounds from the group of oligomeric esters of tris(hydroxyethyl) isocyanurate with aromatic polycarboxylic acids, or benzoguanamine, acetoguanamine, tris(hydroxyethyl) isocyanurate, allantoin, glycoluril, cyanurates, cyanurate-epoxide compounds, urea cyanurate, dicyanamide, guanidine, guanidine phosphate and/or sulfate.

12. The use of mixtures as claimed in one or more of claims 1 to 11, which comprise 99 to 1 % by weight of the mixture of at least one dialkylphosphinic acid of the formula (I) and one different dialkylphosphinic acid of the formula (II) as claimed in at least one of claims 1 to 12 and 1 to 99% by weight of synergist.

13. The use of mixtures as claimed in at least one of claims 1 to 12 as binder, as crosslinker or accelerator in the hardening of epoxy resins, polyurethanes and unsaturated polyester resins.

14. The use of the epoxy resins obtained according to claim 13 for production of prepregs, printed circuit boards and laminates.

15. The use of mixtures as claimed in at least one of claims 1 to 12 as reactive and/or non-reactive flame retardant for polymers, for production of flame-retardant polymer molding compositions and for production of flame-retardant polymer moldings.

16. The use of mixtures as claimed in at least one of claims 1 to 12 as reactive and/or non-reactive flame retardant for thermoset polymers, for production of flame-retardant thermoset polymer molding compositions and for production of flame-retardant thermoset polymer moldings.

17. A flame-retardant thermoset polymer molding composition or polymer molding, film, filament or fiber comprising 0.5 to 45% by weight of the mixtures used according to at least one of claims 1 to 12 of at least one dialkylphosphiric acid of the formula (I) and at least one dialkylphosphiric acid of the formula (II), 0.5 to 99.5% by weight of thermoset polymer or mixtures thereof, 0 to 55% by weight of additives and 0 to 55% by weight of filler or reinforcing materials, where the sum of the components is 100% by weight.

18. A flame-retardant thermoset polymer molding composition or polymer molding, film, filament or fiber as claimed in claim 17, comprising 1 to 30% by weight of mixtures used according to at least one of claims 1 to 12 of at least one dialkylphosphiric acid of the formula (I) and at least one dialkylphosphiric acid of the formula (II), 10 to 95% by weight of thermoset polymer or mixtures thereof, 2 to 30% by weight of additives and 2 to 30% by weight of filler or reinforcing materials, where the sum of the components is 100% by weight.

## Revendications

1. Utilisation de mélanges d'au moins un acide dialkylphosphinique de formule (I) 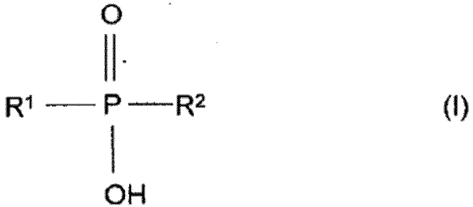 dans laquelle
R¹, R² sont identiques ou différents, et signifient alkyle en C₁-C₁₈, alcényle en C₂-C₁₈, aryle en C₆-C₁₈, alkyl-aryle en C₇-C₁₈,
avec au moins un acide dialkylphosphinique de formule (II) différent de celui-ci 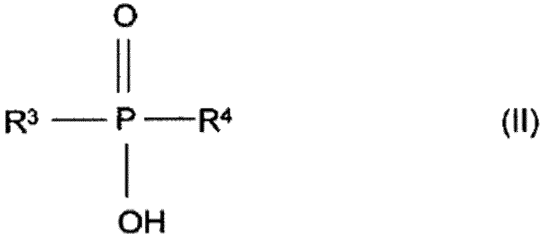 dans laquelle
R³, R⁴ sont identiques ou différents, et signifient alkyle en C₁-C₁₈, alcényle en C₂-C₁₈, aryle en C₆-C₁₈ et/ou alkyl-aryle en C₇-C₁₈,
à condition qu'au moins un des radicaux R³ et R⁴ soit différent de R¹ et R²,
les mélanges contenant 40 à 99,9 % en poids d'acide dialkylphosphinique de formule (I) et 60 à 0,1 % en poids d'acide dialkylphosphinique de formule (II), en tant qu'agent ignifuge pour polymères duroplastiques.

2. Utilisation de mélanges selon la revendication 1, **caractérisée en ce que** R¹ et R² sont identiques ou différents, et signifient méthyle, éthyle, n-propyle, iso-propyle, n-butyle, iso-butyle, tert.-butyle, n-pentyle, iso-pentyle, n-hexyle, iso-hexyle et/ou phényle.

3. Utilisation de mélanges selon la revendication 1 ou 2, **caractérisée en ce que** R³ et R⁴ sont identiques ou différents, et signifient méthyle, éthyle, n-propyle, iso-propyle, n-butyle, iso-butyle, tert.-butyle, n-pentyle, iso-pentyle, n-hexyle, iso-hexyle et/ou phényle, à condition qu'au moins un des radicaux R³ et R⁴ soit différent de R¹ et R².

4. Utilisation de mélanges selon une ou plusieurs des revendications 1 à 3, **caractérisée en ce qu'**ils contiennent 60 à 99,9 % en poids d'acide dialkylphosphinique de formule (I) et 40 à 0,1 % en poids d'un acide dialkylphosphinique de formule (II) différent de celui-ci.

5. Utilisation de mélanges selon une ou plusieurs des revendications 1 à 4, **caractérisée en ce qu'**ils contiennent 80 à 99,9 % en poids d'acide dialkylphosphinique de formule (I) et 20 à 0,1 % en poids d'un acide dialkylphosphinique de formule (II) différent de celui-ci.

6. Utilisation de mélanges selon une ou plusieurs des revendications 1 à 5, **caractérisée en ce qu'**ils contiennent 90 à 99,9 % en poids d'acide dialkylphosphinique de formule (I) et 10 à 0,1 % en poids d'un acide dialkylphosphinique de formule (II) différent de celui-ci.

7. Utilisation de mélanges selon une ou plusieurs des revendications 1 à 6, **caractérisée en ce qu'**ils contiennent 95 à 99,9 % en poids d'acide dialkylphosphinique de formule (I) et 5 à 0,1 % en poids d'un acide dialkylphosphinique de formule (II) différent de celui-ci.

8. Utilisation de mélanges selon une ou plusieurs des revendications 1 à 7, **caractérisée en ce qu'**ils contiennent 98 à 99,9 % en poids d'acide dialkylphosphinique de formule (I) et 2 à 0,1 % en poids d'un acide dialkylphosphinique de formule (II) différent de celui-ci.

9. Utilisation de mélanges selon une ou plusieurs des revendications 1 à 8, **caractérisée en ce que** les acides dialkylphosphiniques sont l'acide diéthylphosphinique, l'acide éthyl-propylphosphinique, l'acide éthyl-butylphosphinique, l'acide éthyl-pentylphosphinique, l'acide éthyl-hexylphosphinique, l'acide dipropylphosphinique, l'acide propyl-butylphosphinique, l'acide propyl-pentylphosphinique, l'acide propyl-hexylphosphinique, l'acide dibutylphosphinique, l'acide butyl-pentylphosphinique, l'acide butyl-hexylphosphinique, l'acide dipentylphosphinique, l'acide pentyl-hexylphosphinique et/ou l'acide dihexylphosphinique.

10. Utilisation de mélanges selon une ou plusieurs des revendications 1 à 9, **caractérisée en ce qu'**ils contiennent 98 à 99,9 % en poids d'acide diéthylphosphinique et 2 à 0,1 % en poids d'acide butyl-éthylphosphinique.

11. Utilisation de mélanges selon une ou plusieurs des revendications 1 à 10, **caractérisée en ce qu'**ils contiennent en outre au moins un synergiste, celui-ci consistant en un composé contenant de l'azote tel que le mélem, le mélam, le mélon, le borate de mélamine, le cyanurate de mélamine, le phosphate de mélamine, le phosphate de dimélamine, le triphosphate de pentamélamine, le diphosphate de trimélamine, le triphosphate de tétrakismélamine, le pentaphosphate d'hexakismélamine, le diphosphate de mélamine, le tétraphosphate de mélamine, le pyrophosphate de mélamine, le polyphosphate de mélamine, le polyphosphate de mélam, le polyphosphate de mélem et/ou le polyphosphate de mélon ;
en des composés d'aluminium tels que l'hydroxyde d'aluminium, l'halloysite, les produits de saphir, la boehmite, la nano-boehmite ;
en des composés de magnésium tels que l'hydroxyde de magnésium ;
en des composés d'étain tels que les oxydes d'étain ; en des composés d'antimoine tels que les oxydes d'antimoine ;
en des composés de zinc tels que l'oxyde de zinc, l'hydroxyde de zinc, l'oxyhydrate de zinc, le carbonate de zinc, le stannate de zinc, l'hydroxystannate de zinc, le silicate de zinc, le phosphate de zinc, le borophosphate de zinc, le borate de zinc et/ou le molybdate de zinc ;
en des composés de silicium tels que les silicates et/ou les silicones ;
en des composés de phosphore tels que les acides phosphiniques et leurs sels, les acides phosphoniques et leurs sels et/ou les oxydes de phosphine, les phosphazènes et/ou les (pyro)phosphates de pipérazine ; en des carbodiimides, des pipérazines, des (poly-)isocyanates, des polymères de styrène-acryle ; et/ou du carbinylbiscaprolactame ;
en des composés azotés du groupe des esters oligomères de l'isocyanurate de tris(hydroxyéthyle) avec des acides polycarbiniques aromatiques, ou la benzoguanamine, l'acétoguanamine, l'isocyanurate de tris(hydroxyéthyle), l'allantoïne, le glycouril, les cyanurates, les composés de cyanurate-époxyde, le cyanurate d'urée, le dicyanamide, la guanidine, le phosphate et/ou le sulfate de guanidine.

12. Utilisation de mélanges selon une ou plusieurs des revendications 1 à 11, **caractérisée en ce qu'**ils contiennent 99 à 1% en poids des mélanges d'au moins un acide dialkylphosphinique de formule (I) et d'un acide dialkylphosphinique de formule (II) différent de celui-ci selon au moins l'une quelconque des revendications 1 à 12 et 1 à 99 % en poids de synergiste.

13. Utilisation de mélanges selon au moins l'une quelconque des revendications 1 à 12 en tant que liant, en tant qu'agent de réticulation ou accélérateur lors du durcissement de résines époxy, de polyuréthanes et de résines de polyester insaturées.

14. Utilisation des résines époxy obtenues selon la revendication 13 pour la fabrication de pré-imprégnés, de circuits imprimés et de stratifiés.

15. Utilisation de mélanges selon au moins l'une quelconque des revendications 1 à 12 en tant qu'agent ignifuge réactif et/ou non réactif pour polymères, pour la fabrication de matériaux de moulage polymères ignifugés et pour la fabrication de corps moulés polymères ignifugés.

16. Utilisation de mélanges selon au moins l'une quelconque des revendications 1 à 12 en tant qu'agent ignifuge réactif et/ou non réactif pour polymères duroplastiques, pour la fabrication de matériaux de moulage polymères duroplastiques ignifugés et pour la fabrication de corps moulés polymères duroplastiques ignifugés.

17. Matériaux de moulage polymères, corps moulés, films, fils et fibres polymères duroplastiques ignifugés contenant 0,5 à 45 % en poids des mélanges utilisés selon au moins l'une quelconque des revendications 1 à 12 d'au moins un acide dialkylphosphinique de formule (I) et d'au moins un acide dialkylphosphinique de formule (II), 0,5 à 99,5 % en poids d'un polymère duroplastique ou de mélanges de celui-ci, 0 à 55 % en poids d'additifs et 0 à 55 % en poids de charges ou de matériaux de renforcement, la somme des composants étant de 100 % en poids.

18. Matériaux de moulage polymères, corps moulés, films, fils et fibres polymères duroplastiques ignifugés selon la revendication 17, contenant 1 à 30 % en poids des mélanges utilisés selon au moins l'une quelconque des revendications 1 à 12 d'au moins un acide dialkylphosphinique de formule (I) et d'au moins un acide dialkylphosphinique de formule (II), 10 à 95 % en poids d'un polymère duroplastique ou de mélanges de celui-ci, 2 à 30 % en poids d'additifs et 2 à 30 % en poids de charges ou de matériaux de renforcement, la somme des composants étant de 100 % en poids.
